# EUROPEAN PATENT APPLICATION

(11) **EP 1 487 083 A2**
(43) Date of publication of application: **15.12.2004**
(21) Application number: 04102057.9
(22) Date of filing: 12.05.2004
(51) Int. Cl.: H02K 1/18, H02K 11/04

(54) **Electric motor assembly**

(30) Priority: 09.06.2003 KR 2003036913
(71) Applicant: Samsung Electronics Co., Ltd., Suwon-si, Gyeonggi-Do 442-742 (KR)
(72) Inventor: Lee, Hwan-seung, Giheung-eup, Yongin-si, Gyeonggi-do (KR); Seol, Young-yun, Seoul, (KR)
(74) Representative: Read, Matthew Charles

(57) **Abstract**

A capstan-motor assembly for a magnetic recording/reading apparatus comprises a bearing holder fixed to a motor frame on a main deck for rotatably supporting a shaft; a stator core coupled to the bearing holder, and on which a coil is wound; a rotor frame coupled to the shaft so as to be rotated together with the shaft, and in which a magnet corresponding to the coil is supported; and a PCB substrate disposed between the stator core and the motor frame, and electrically connected with the coil. The bearing holder has a soldering boss soldered to the PCB substrate and/or the stator core so as to protrude to outer surfaces thereof, thereby reducing components needed to affix PCB substrate and stator core to the bearing holder.

## Description

The present invention relates to a motor assembly comprising a central stator, i.e. a stator about which the rotor rotates, and a PCB mounted to the stator.

A typical use of a low-profile motor is for driving the capstan of a a magnetric recording/reproducing apparatus such as a VCR or a camcorder.

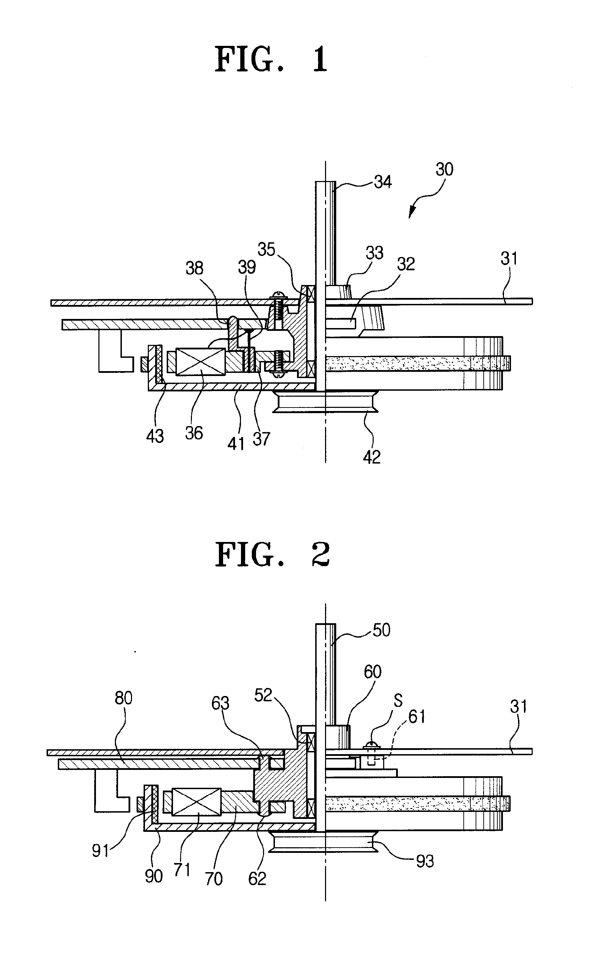

Figure 1 shows an example of a capstan motor assembly.

The capstan motor assembly 30 has a plate 31 and a PCB 32 below the plate 31. A bearing holder 33 is fixed to the plate 31 by means of a screw. A shaft 33 is supported coaxially within the bearing holder 33 by bearings 35.

The cores 37 of a stator radiate from the bearing holder 33. A coil 36 is fixed to each core by a screw. A stator core 37 is connected by a holder pin 38 to the PCB 32 which fixes the reletive positions of the PCB 32, the bearing holder 33 and the plate 31. The lower end of the holder pin 38 is fitted into a hole, formed in a stator core 37, and the upper end of the holder pin 38 is fitted into a hole, formed in the PCB 32. A lead 39 is disposed near the holder pin 38 and extends between the PCB 32 and the stator core 7. The lead 39 is an extension of the coil 36 on the stator core 37 and is soldered to the PCB 32.

A rotor 41 and a pulley 42 are fixed to the lower end of the shaft. The rotor 41 has a circumferential wall, the inside of which is lined with a ring of permenant magnets 43.

A motor assembly, according to the present invention, is characterised in that the PCB is fastened to the stator by an integral rivet projecting from the stator. Consequently, there is a reduction in the number of components from the number that would otherwise be required.

The PCB is fastened to the stator by a plurality of integral rivets projecting from the stator.

The stator may comprises a central bearing housing and a ring from which a plurality of salient poles project radially outwards. Preferably, the ring is fastened to the bearing housing by one of more integral rivets projecting from the bearing housing.

Preferably, the or each integral rivet projects parallel to the axis of rotation of the motor's rotor.

Preferably, the or each integral rivet is formed of a plastics material.

A method of manufacturing an assembly according to the present invention, which uses plastic integral rivets, comprises using heat for deforming the distal end of each PCB-fastening rivet such that it spreads and prevents removal of the PCB or the ring.

A motor assembly according to the present invention may conveniently be employed in a tape recorder/player, e.g. a VCR or a camcorder, to drive its capstan.

An embodiment of the present invention will now be described, by way of example, with reference to Figures 2 to 6 of the accompanying drawings, in which:
Figure 1 is a cross-sectional view of a known capstan motor assembly;
Figure 2 is a cross-sectional view of a capstan motor assembly according to the present invention;
Figure 3 is an exploded perspective view of the capstan motor assembly shown in Figure 2;
Figures 4 and 5 are perspective views showing the stator core, bearing holder and PCB of the assembly of Figure 3; and
Figure 6 shows the PCB and the stator core coupled to the bearing holder of Figure 3 prior to being fixed together.

Referring to Figure 2, a capstan motor assembly for a magnetic recording/reading apparatus, according to the present invention, comprises a bearing holder 60 which rotatably supports a shaft 50, a stator core 70 coupled to the bearing holder 60, a PCB 80 coupled to the bearing holder 60 and a rotor 90 coupled to the lower end of the shaft 50.

The shaft 50 is supported by means of a bearing 52 so as to be rotatable with respect to the bearing holder 60.

The bearing holder 60 is fixed to a plate 31, disposed to be apart from an upper side of a deck of the magnetic recording/reading apparatus. The bearing holder 60 is fixed to the plate 31 by a screw S. A threaded holes 61 is provided in an upper portion of the bearing holder 60 for receiving the screw S.

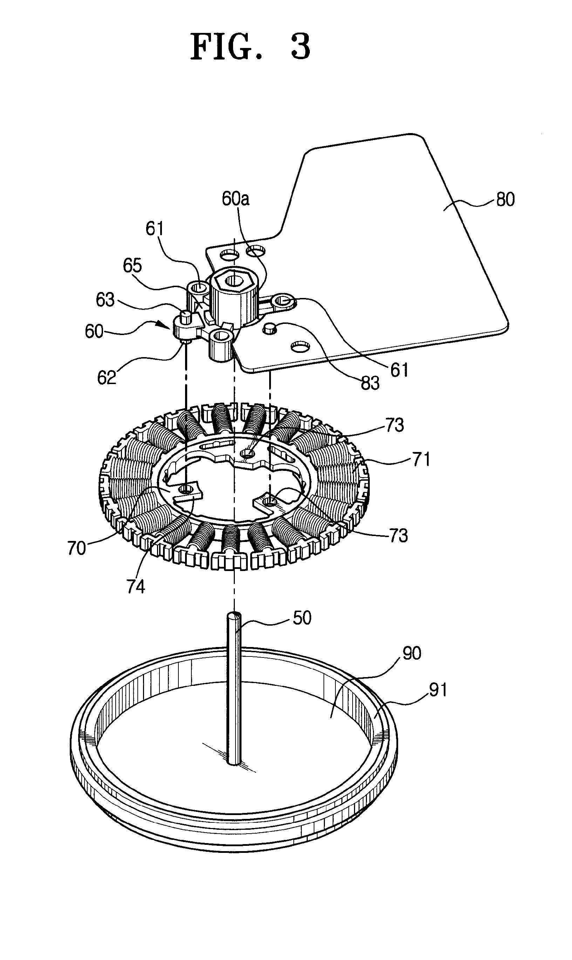

Referring to Figure 3, a plurality of these threaded holes 61 are formed equidistantly around a shaft coupling portion 60a, in which the shaft 50 is located. In the illustrated embodiment, three threaded holes 61 are provided by way of example.

The stator is coupled to a lower portion of the bearing holder 60. Coils 71 are wound on cores 70 of the stator. As shown in Figure 3, the stator is provided with a plurality of fixing holes 73 at desired positions to facilitate coupling to the bearing holder 60. A plurality of tags 74 are integrally formed with the stator so as to extend radially inwards. Each of the fixing holes 73 is formed in a corresponding tab 74. The fixing holes 73 are symmetrically formed at desired anglular spacings with the shaft coupling portion 60a in the center.

The PCB 80 is supported by the bearing holder 60 so as to be positioned underneath the plate 31. A coil lead is connected to the PCB 80 by means of soldering or other conventional electrical connection. The PCB 80 is coupled to the upper portion of the bearing holder 60 in the same way as the stator. To this end, the PCB 80 has a fixing hole 83. It is preferred to provide multiple fixing holes 83.

The rotor 90 is coupled to the lower end of the shaft 50 for rotation with the shaft 50. The rotor 90 has a circumferential wall and magnets 91 are disposed around the inside of the circumferential wall. A pulley 93 is coupled to the rotor 90 so as to be rotated together with the rotor 90. Driving for a tape reel of a tape cassette in the magnetic recording/reading apparatus taken the pulley 93.

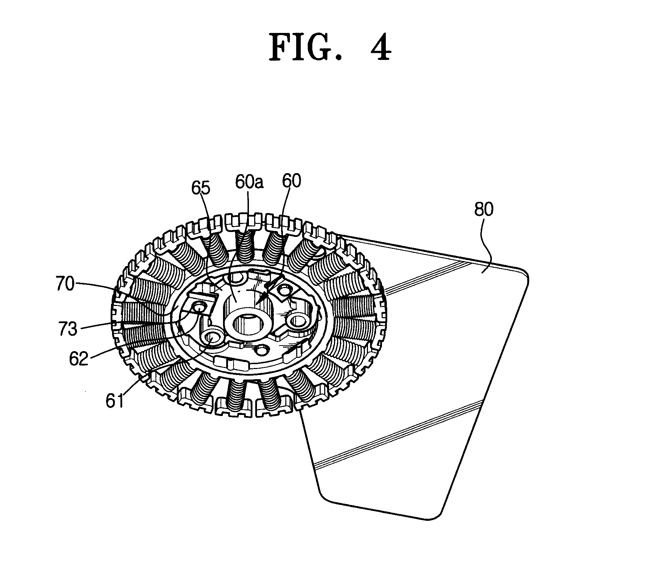

The bearing holder 60 has fixing bosses 62, 63 which are melted to the stator core 70 and the PCB 80. In the embodiment of the present invention, the stator core 70 and the PCB 80 are each melted to the bearing holder 60 in a plurality of locations. To this end, the fixing boss is divided into a lower fixing boss 62 protruding downwards and an upper fixing boss 63 protruding upwards. As shown in Figure 4, the lower fixing boss 62 is fitted into the fixing hole 73 and melted by a suitable machine so that it spreads slightly over the lower surface of the stator. Therefore, the stator can be fixed without any separate coupling members, such as screws or rivets, etc.

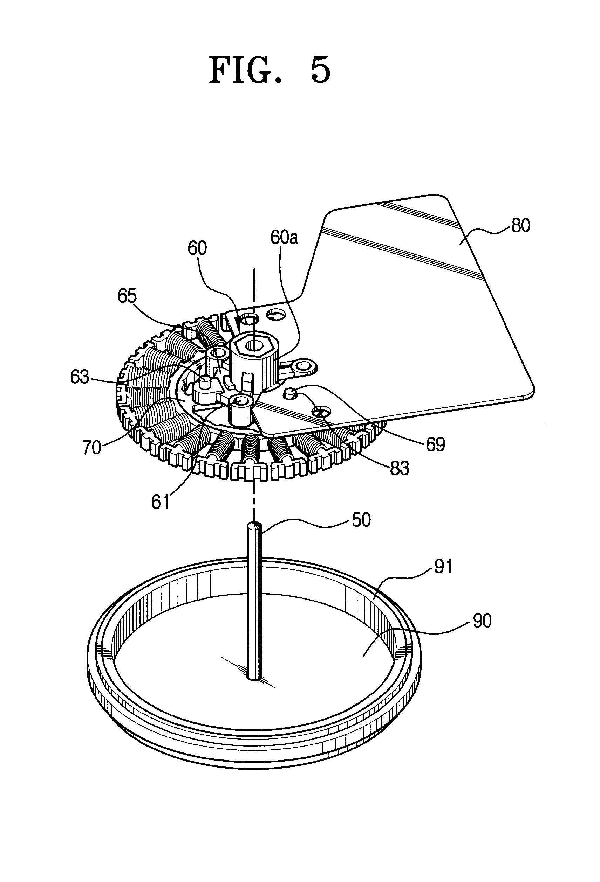

The upper fixing boss 63 is fitted into the fixing hole 83 in the PCB 80 and melted to the upper surface of the PCB 80, such that the PCB 80 is in close contact with the bearing holder 60. Thus, the PCB 80 is also fixed to the bearing holder 60 in a simple way without any separate coupling member. As shown in Figure 5, there are provided three upper fixing bosses 63. However, only two fixing holes 83 are provided at the PCB 80. Therefore, two out of the three upper fixing bosses 63 are used.

The lower and upper fixing bosses 62, 63 are aligned with each other so that an upper fixing boss 63 is axially aligned with a lower fixing boss 62. The plurality of lower and upper fixing bosses 62, 63 are provided so as protrude downwards and upwards from the bearing holder 60. The fixing bosses 62, 63 are located so as to alternate with the threaded holes 61 and be equidistant (120°) around the shaft coupling portion 60a. Each of the fixing bosses 62, 63 and the threaded holes 61 are integrally formed in ribs 65 formed around the shaft coupling portion 60a.

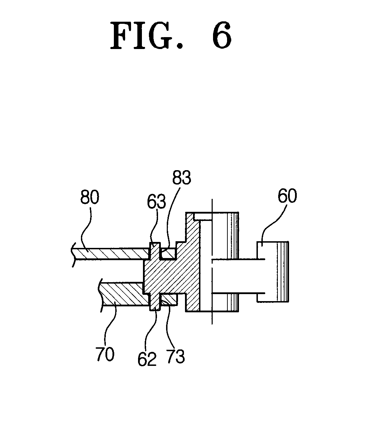

In addition, as shown in Figure 6, the heights of the fixing bosses 62, 63 are greater than the depths of the fixing holes 73, 83. Therefore, after the fixing bosses 62, 63 have been inserted into the fixing holes 73, 83, they project from the other ends of the holes 73, 83, thereby increasing the strengths of the joints. Accordingly, after the fixing bosses 62, 63 have been melted, as shown in Figure 2, the material covers each of the fixing holes 73, 83. Preferably, the bearing holder 60 as described above is made of a plastic synthetic material which can be deformed by external heat and also rapidly cooled.

According to the capstan motor assembly for the magnetic recording/reading apparatus, as described above, the PCB and the stator core can be fixed to the bearing holder by the melting process. Therefore, since separate coupling members are not needed, the number of components is decreased and also a construction is simplified.

## Claims

1. A motor assembly comprising a central stator (60, 70) and a PCB (80) mounted to the stator (60, 70), **characterised in that** the PCB (80) is fastened to the stator (60, 70) by an integral rivet (63) projecting from the stator (60, 70).

2. A motor assembly according to claim 1, wherein the PCB (80) is fastened to the stator (60, 70) by a plurality of integral rivets (63) projecting from the stator (60, 70).

3. A motor assembly according to claim 1 or 2, wherein the stator (60, 70) comprises a central bearing housing (60) and a ring (70) from which a plurality of salient poles project radially outwards.

4. A motor assembly according to claim 3, wherein said integral rivet or rivets project from the bearing housing.

5. A motor assembly according to claim 3 or 4, wherein the ring (70) is fastened to the bearing housing by an integral rivet (62) projecting from the bearing housing.

6. A motor assembly according to claim 5, wherein the ring (70) is fastened to the bearing housing by a plurality of integral rivets (62) projecting from the bearing housing.

7. A motor assembly according to any preceding claim, wherein the or each integral rivet (62, 63) projects parallel to the axis of rotation of the motor's rotor (90).

8. A motor assembly according to any preceding claim, wherein the or each integral rivet (62, 63) is formed of a plastics material.

9. A method of manufacturing an assembly according to claim 8, comprising using heat for deforming the distal end of each PCB-fastening rivet (63) such that it spreads and prevents removal of the PCB (80) or the ring (70).

10. A tape recorder/player including a capstan driven by a motor assembly according to any one of claims 1 to 8.

11. A magnetic recording/reading apparatus comprising:
a bearing holder configured for connection to a motor frame to rotatably support a shaft;
a stator core on which a coil is wound to interact with a magnet on a rotor frame to generate rotational force to rotate the shaft; and a circuit board;
wherein the bearing holder, the stator core and the circuit board each comprise at least one hole aligned with respect to each other and configured to receive a soldering boss device therethrough for coupling together as an assembly, the soldering boss device comprising first and second soldering boss portions protruding from the corresponding hole at the top and bottom, respectively, of the assembly to facilitate the coupling thereof.

12. A magnetic reading/recording apparatus as claimed in claim 11, further comprising a plurality of the holes in each of the bearing holder, the stator core and the circuit board for each receiving respective soldering boss devices, the plurality of holes in the bearing holder being arranged radially about the shaft.

13. A magnetic reading/recording apparatus as claimed in claim 11, wherein the bearing holder comprises another hole configured to receive a screw threaded into the motor frame of the magnetic reading/recording apparatus.

14. A magnetic reading/recording apparatus as claimed in claim 13, wherein the bearing holder and the motor frame each comprise a plurality of the holes, the plurality of holes receiving respective screws therethrough.

15. A magnetic reading/recording apparatus as claimed in claim 14, wherein the bearing holder, the stator core and the circuit board each comprise a plurality of the holes for receiving respective soldering boss devices therethrough.

16. A magnetic reading/recording apparatus as claimed in claim 15, wherein the plurality of the holes in the bearing holder for receiving respective soldering boss devices are arranged radially with respect to each other about the shaft.

17. A magnetic reading/recording apparatus as claim in claim 16, wherein the plurality of holes in bearing holder for receiving respective soldering boss devices consists of three such holes spaced 120° radially with respect to each other.

18. A magnetic reading/recording apparatus as claimed in claim 16, wherein the plurality of holes in the bearing holder for receiving respective screws are interspersed with the plurality of holes in the bearing holder for receiving respective soldering boss devices.

19. A magnetic reading/recording apparatus as claimed in claim 18, wherein the plurality of holes in the bearing holder for receiving respective screws are alternated with the plurality of holes in the bearing holder for receiving respective soldering boss devices.

20. A magnetic reading/recording apparatus as claimed in claim 19, wherein each of the holes in the bearing holder for receiving respective soldering boss devices consists of three such holes spaced 120° radially with respect to each other and each of the holes in the bearing holder for receiving respective screws.

21. A magnetic reading/recording apparatus as claimed in claim 11, wherein the bearing holder is composed of a plastic synthetic material.

22. A magnetic reading/recording apparatus as claimed in claim 11, wherein the soldering boss device is soldered in the hole, and the solder is spread widely over the corresponding hole at the top and bottom, respectively, of the assembly.

23. A magnetic reading/recording apparatus as claimed in claim 11, wherein the coil is electrically connected to the circuit board by a lead line.

24. A magnetic reading/recording apparatus as claimed in claim 12, wherein the starter core comprises a plurality of ribs extending from an inner circumferential portion thereof, the plurality of holes in the stator core being formed in corresponding ribs.

25. A method of assembling a capstan-motor assembly for a magnetic reading/recording apparatus, the capstan-motor assembly having a bearing holder configured for connection to a motor frame to rotatably support a shaft, a stator core on which a coil is wound to interact with a magnet on a motor frame to generate rotational force to rotate the shaft, and a circuit board, comprises the steps of:
providing a hole in each of the bearing holder, the stator core and the circuit board configured for receiving a soldering boss device configured;
assembling the bearing holder, the stator core and the circuit board to align their respective holes; and
inserting a soldering boss device through the aligned holes.

26. A method as claimed in claim 25, further comprising the steps of:
soldering the soldering boss device in the aligned holes; and
spreading the solder widely over the respective hole at the top and bottom of the assembly.

27. A method as claimed in claim 25, further comprising the step of providing a plurality of holes in each of the bearing holder, the stator core and the circuit board for alignment together and receiving respective soldering boss devices.

28. A method as claimed in claim 27, further comprising the step of arranging the plurality of holes in the bearing holder radially about the shaft.

29. A method as claimed in claim 28, wherein the bearing holder has three of the holes and the arranging step comprises the step of arranging the three holes 120° apart from each other.

30. A method as claimed in claim 28, further comprising the step of providing a plurality of holes in the motor frame and the bearing holder that are aligned and configured for receiving respective screws therethrough.

31. A method as claimed in claim 30, further comprising the step of interspersing the plurality of holes in the bearing holder for receiving respective screws with the plurality of holes in the bearing holder for receiving respective soldering boss devices.
